# EUROPÄISCHE PATENTSCHRIFT

(11) **EP 3 087 298 B1**
(45) Veröffentlichungstag und Bekanntmachung des Hinweises auf die Patenterteilung: **09.01.2019**
(21) Anmeldenummer: 14821074.3
(22) Anmeldetag: 18.12.2014
(51) Int. Cl.: F16L 1/028, E21B 7/04, E21B 7/28, E21B 7/20

(54) **VERFAHREN UND VORRICHTUNG ZUM GRABENLOSEN VERLEGEN VON ROHRLEITUNGEN**
METHOD AND DEVICE FOR TRENCHLESS PIPE LAYING
PROCÉDÉ ET DISPOSITIF DE POSE DE CONDUITES SANS TRANCHÉE

(30) Priorität: 23.12.2013 DE 102013021889
(43) Veröffentlichungstag der Anmeldung: 02.11.2016
(73) Patentinhaber: Herrenknecht AG, 77963 Schwanau (DE)
(72) Erfinder: LUBBERGER, Michael, 77963 Schwanau (DE); RENNKAMP, Diana, 79333 Lahr (DE)
(74) Vertreter: Klickow & Wetzel PartGmbB
(86) Internationale Anmeldenummer: PCT/EP2014/003425
(87) Internationale Veröffentlichungsnummer: WO 2015/096894

(56) Entgegenhaltungen:
- WO-A2-2013/040408
- CN-A- 102 587 833
- DE-A1-102012 004 762
- DE-C1- 19 646 341
- US-A1- 2005 034 896

## Beschreibung

Die Erfindung betrifft Bohr- und Verlegevorrichtung zum grabenlosen Verlegen einer Rohrleitung, beispielsweise mit einem Durchmesser von mehr als 350 mm bzw. mehr als 500 mm, mit einem Bohrkopf zum Lösen des Gesteins, wobei der Bohrkopf einen Anschluss für ein Pilotbohrgestänge und einen Anschluss für ein nachfolgendes Element der Bohr- und Verlegevorrichtung aufweist, mit einem Drehelement und einem Verbindungsabschnitt als Anschluss für die Rohrleitung, wobei hinter dem Bohrkopf ein Förderabschnitt vorgesehen ist, in dem wenigstens ein Aufnahmeelement zum Aufnehmen des gelösten Gesteins vorgesehen ist, wobei ein Funktionsabschnitt vorgesehen ist, in dem eine Pumpe zum Ansaugen und Abfördern des vom Bohrkopf gelösten Bohrkleins angeordnet ist und an dem der Verbindungsabschnitt angeordnet ist, und ein Bohr- und Verlegeverfahren zum grabenlosen Verlegen einer Rohrleitung bei dem entlang einer vorgegebenen Bohrlinie eine Pilotbohrung von einem Startpunkt zu einem Zielpunkt erstellt wird, wobei die Pilotbohrung durch das Vorschieben eines Pilotbohrkopfes mit einem Pilotbohrgestänge kleiner 800 mm erfolgt, bei dem nach Erreichen des Zielpunktes an einem Ende des Pilotbohrgestänges ein Bohr- und Verlegekopf angeschlossen wird, der mit der Rohrleitung verbunden wird, und über den das Bohrloch aufgeweitet und gleichzeitig durch Herausziehen des Pilotbohrgestänges aus dem Bohrloch an einer Seite und/oder durch Einschieben der Rohrleitung in das Bohrloch die Rohrleitung verlegt wird.

DE 10 2012 004762 A1 offenbart eine Bohr- und Verlegevorrichtung zum grabenlosen Verlegen einer Rohrleitung. Es ist eine Bohrvorrichtung in Form einer klassischen Tunnelbohrmaschine (TBM) vorgesehen, die einen Bohrkopf aufweist, der einen Anschluss für ein Pilotbohrgestänge aufweist. Über das Pilotbohrgestänge kann die Bohrrichtung vorgegeben werden und es kann Zug auf den Bohrkopf und den nachfolgenden Rohrleitungsstrang ausgeübt werden. Vor der Bohrvorrichtung bzw. dem Bohrkopf ist ein Drehelement vorgesehen, mit dem die TBM gegenüber dem Pilotbohrgestänge entkoppelt wird. Innerhalb der Bohrvorrichtung ist ein Antrieb für den Bohrkopf vorgesehen. Der Bohrkopf wird über den in der TBM vorgesehenen Motor und ein Getriebeelement gedreht. Hinter dem Bohrkopf ist ein Brecher angeordnet, und es ist ein Aufnahmebereich vorhanden, in dem das Bohrklein über eine Rohrleitung aus dem Bohrbereich abtransportiert wird. Hierfür ist in der TBM eine Förderpumpe vorgesehen, die das Bohrklein zusammen mit der Spülflüssigkeit bewegt. Am Ende der Bohrvorrichtung ist ein Auslass der Förderleitung vorgesehen, sodass das Bohrklein zusammen mit der Spülflüssigkeit in den Ringraum abgegeben wird. Am hinteren Ende ist an der Bohrvorrichtung die zu verlegende Rohrleitung angeordnet.

EP 2 447 462 A1 offenbart ein Verfahren zum grabenlosen Verlegen einer Rohrleitung. Es wird eine HDD-Pilotbohrung von einem Start- zu einem Zielpunkt durchgeführt. Am Zielpunkt wird der Pilotbohrstrang mit einem Räumer verbunden. Der Räumer weitet das Bohrloch auf den Enddurchmesser auf. Zwischen Räumer und Rohrleitung ist ein Drehelement angeordnet, so dass sich der Räumer zusammen mit dem Pilotbohrstrang drehen kann, während die Pipeline drehungslos eingezogen wird. Die Rohrleitung wird über eine Schiebevorrichtung in das Bohrloch eingeschoben, während auf der übrigen gegenüberliegenden Seite die Pilotbohrstrangelemente aus dem Bohrloch herausgezogen werden. Der Einsatzbereich des offenbarten Verfahrens ist für einen nicht zu harten Boden angegeben. Nachteilig hierbei ist, dass wie aus den Figuren erkennbar ist, ein erheblicher Überschnitt erforderlich ist, um den Abtransport des vom Räumer gelösten Bohrkleins zu gewährleisten.

Aus der EP 0 360 321 A1 ist ebenfalls ein sogenanntes HDD-Verfahren (Horizontal Directional Drilling) bekannt, bei dem zum grabenlosen Verlegen einer Rohrleitung unter einem Hindernis entlang einer vorgegebenen Bohrlinie eine Pilotbohrung von einem Startpunkt zu einem Zielpunkt erstellt wird. Anschließend wird an dem Pilotbohrstrang an der Zielseite ein Räumer angebracht, der mit der zu verlegenden Pipeline verbunden ist. Durch Drehen des Pilotstrangs wird der Räumer angetrieben. Ein Vorschub des Räumers unter gleichzeitigem Einziehen der Pipeline erfolgt durch Herausziehen des Pilotbohrstranges. Der Räumer ist dabei so ausgeführt, dass er an der Verbindungsseite zur Pipeline geschlossen ist. Lediglich eine Abfuhrleitung für die Abfuhr des gelösten Bodens in Verbindung mit einer Suspension zur Schmierung der Pipeline, zum Offenhalten des Bohrloches und zum Abtransport des Bohrkleins ist in der Bohrleitung vorgesehen. Auf der Vorderseite ist der Räumer offen ausgeführt, so dass die durch den Räumer gelöste Erde in den Räumer eintreten kann und dort mit Wasser vermischt abgeführt werden kann. Der Räumer selbst stellt einen zylindrischen Körper dar, der an seiner Vorderseite Zähne aufweist, durch die der Boden gelöst wird. Der Einsatz dieses Verfahrens ist beschränkt auf Lockergestein, also nicht standfester Baugrund wie Böden, Sande oder dergleichen.

DE 198 08 478 A1 offenbart ebenfalls ein Verfahren zum grabenlosen Verlegen von Rohren. Hierbei wird ebenfalls eine HDD-Pilotbohrung von einem Start- zu einem Zielpunkt aufgefahren. Am Zielpunkt wird der HDD-Pilotstrang mit einer Microtunnel-Bohrmaschine verbunden, an der die Pipeline zugfest angeordnet ist. Die Microtunnel-Bohrmaschine löst den Boden und transportiert diesen durch den Rohrstrang ab. Hier ist ebenfalls der Einsatz dieses Verfahrens im Lockergestein offenbart.

US 5,269,384 A offenbart ein Verfahren und eine Vorrichtung zum Aufweiten und Reinigen eines Bohrlochs. Hierbei wird wie ebenfalls Mittels einer HDD-Bohrung eine Pilotbohrung hergestellt. Anschließend wird ein Räumer an dem Pilotbohrstrang angebracht. Hinter dem Räumer ist eine Rohrleitung vorgesehen, die im Wesentlichen dem Durchmesser des Pilotbohrstrangs entspricht. Zum Abfördern des durch den Räumer gelösten Bodens wird eine Venturieffekt-Pumpe vorgesehen, die über Bohrsuspension angetrieben wird. Durch den an der Ansaugseite der Pumpe entstehenden Unterdruck wird das Bohrklein hinter dem Räumer angesaugt und durch die Rohrleitung abtransportiert. Der Einsatz des hier beschriebenen Verfahrens und der hier beschriebenen Vorrichtung wird insbesondere dann als vorteilhaft eingeschätzt, wenn aufgrund instabiler Bohrlochverhältnisse bzw. dem Bohren im Lockergestein das Bohrklein nicht durch eine Erhöhung der Fließgeschwindigkeit der Bohrlochspülung besser ausgetragen werden kann, da dieses in den genannten Bedingungen zu Ausspülungen in der Bohrlochwand führt. Einsatzbereich ist hier das Bohren und Verlegen in Lockergestein angegeben. Der Aufbau der Bohrvorrichtung hat sich als sehr kompliziert und unpraktisch insbesondere in festeren Gesteinen erweisen. Weitere Komponenten zum Aufweiten einer Mit HDD erstellten Bohrung und gleichzeitigem Einziehen der Rohrleitung sind in US 2005/0034896 A1, WO 2013/040408 A2 und DE 19646341 C1 gezeigt. CN 102587833 A zeigt eine flexible Tunnelbohrvorrichtung.

Nachteilig an diesen Vorrichtungen und Verfahren ist, dass sie lediglich im Lockergestein einsetzbar sind. Weiterhin ist es nicht ohne weiteres möglich, eine kontrollierte Abförderung des Bohrkleins zu bewerkstelligen. Dieses wird unter Anderem versucht dadurch zu kompensieren, dass mit teilweise erheblichen Überschnitten gearbeitet wird.

Aufgabe der Erfindung ist es, ein Bohr- und Verlegevorrichtung und ein Verfahren zu schaffen, mit denen die vorgenannten Nachteile überwunden werden.

Hinsichtlich der Bohr- und Verlegevorrichtung sieht die erfindungsgemäße Lösung vor, dass das Drehelement zwischen Bohrkopf und Funktionsabschnitt angeordnet ist, so dass der Funktionsabschnitt und der Bohrkopf rotationsentkoppelt sind, dass der Bohrkopf über das Pilotbohrgestänge angetrieben ist, und dass der Bohrkopf über wenigstens einen Anschluss gegenüber dem Förderabschnitt verschwenkbar ist.

Vorteilhaft dabei ist, dass es möglich ist, gezielt das Bohrklein abzufördern. Weiterhin hat sich überraschender Weise gezeigt, dass es durch diesen Aufbau möglich ist, Rohrleitungen insbesondere in standfestem Gestein zu verlegen ohne erheblichen Überschnitt vorsehen zu müssen.

Eine vorteilhafte Lehre der Erfindung sieht vor, dass es sich bei dem Bohrkopf um einen Raisebohrkopf oder einen Aufweitungsbohrkopf, bevorzugt mit Schneidrollen, handelt. Hierdurch wird ein Verlegen der Rohrleitung in Festgestein besonders einfach möglich.

Eine vorteilhafte Lehre der Erfindung sieht vor, dass der Förderabschnitt ein mit dem Funktionsabschnitt verbundener Schildabschnitt ist. Weiterhin ist vorteilhaft, dass der Schildabschnitt gegenüber dem Funktionsabschnitt beweglich, bevorzugt bewegbar, besonders bevorzugt über Hydraulikzylinder, ausgeführt ist. Durch eine hydraulische Ansteuerung der Hydraulikzylinder können diese vorteilhafterweise als Rescue Tool verwendet werden. Durch eine wechselnde Druckbelastung der Zylinder kann ein festgeklemmter Rohrstrang wieder frei gerüttelt werden. Durch den Schildabschnitt wird die Abförderung des Bohrkleins verbessert. Durch die Hydraulikzylinder wird die Bewegbarkeit der Bohr- und Verlegevorrichtung im Bohrloch auf einfache Weise verbessert. Weiterhin ist vorteilhaft, dass an den Schildabschnitt wenigstens ein Schneidwerkzeug vorgesehen ist. Hierdurch wird in der Bohrwandung ggf. noch vorhandenes loses Gestein einfach gelöst. Dieses führt zur Verschleißminderung.

Eine vorteilhafte Lehre der Erfindung sieht vor, dass der Hydraulikzylinder als Meßelement vorgesehen ist. Hierdurch wird es auf einfache Weise möglich die Zugkraft bzw. die vorherrschende Reibung zu erfassen. Weiterhin kann über die Erfassung des Kolbens die Verwinkelung in der Vorrichtung erfasst werden. Auch kann über die Erfassung der Verwinkelung eine Nachvermessung des Bohrlochs durchgeführt werden.

Eine vorteilhafte Lehre der Erfindung sieht vor, dass eine Schmiervorrichtung vorgesehen ist, die bevorzugt hinter bzw. an dem Aufnahmeabschnitt und/oder dem Funktionsabschnitt angeordnet ist, wobei dafür Auslässe zu Abgabe von Schmiermittel, bevorzugt Bohrsuspension, vorgesehen sind.

Eine vorteilhafte Lehre der Erfindung sieht vor, dass das Aufnahmeelement ein Ansaugelement ist, bevorzugt ein Saugstutzen und/oder ein Ansaugtrichter ist. Hierdurch wird ein Absaugen des Bohrkleins ermöglicht bzw. erleichtert. Weiterhin ist vorteilhaft, dass am Ansaugelement ein Trennelement nach der Korngröße des Bohrkleins vorgesehen ist. Dieses Trennelement fungiert als Kornbegrenzung. Darüber wird ein Zusetzen der Förderleitung bzw. Pumpen durch zu großer Feststoffteilchen oder Brocken verhindert.

Eine vorteilhafte Lehre der Erfindung sieht vor, dass es sich bei dem Förderabschnitt um einen Rotationskörper mit Einlassabschnitten, wobei die Einlassabschnitte bevorzugt schaufelartig mit integrierten Einlassöffnungen ausgeführt sind. Vorteilhaft ist weiterhin, dass es sich bei der Pumpe um eine Strahlpumpe handelt. Eine alternative Lehre der Erfindung sieht vor, dass es sich bei der Pumpe um eine Kreiselpumpe handelt. Durch diese beiden Varianten lässt sich das Bohrklein verschleißarm und effizient bei geringen Kosten abfördern. Weiterhin ist vorteilhaft, dass das Drehelement so ausgeführt ist, dass durch das Drehelement Bohrspülung pumpbar ist.

Eine vorteilhafte Lehre der Erfindung sieht vor, dass das Bohren und Verlegen in Festgestein mit einer durchschnittlichen Festigkeit größer 150 MPa, bevorzugt größer 200 MPa, vornehmbar ist.

Hinsichtlich des Bohr- und Verlegeverfahrens sieht die erfindungsgemäße Lösung vor, dass der Bohrkopf über das Pilotbohrgestänge gedreht wird, dass das durch den Bohrkopf gelöstes Bohrklein hinter dem Bohrkopf der Bohr- und Verlegevorrichtung hydraulisch aufgenommen und aus dem Bohrloch mittels einer im Bohrloch angeordneten Pumpe und über eine in der Rohrleitung vorgesehenen Förderleitung zusammen mit der Bohrspülung abgefördert wird, dass das Verlegen in einem standfesten Gestein mit einer durchschnittlichen Festigkeit größer 150 MPa, bevorzugt größer 200 MPa, erfolgt, wobei insbesondere Rohrleitung mit einem Durchmesser größer 350, 500 oder 800 mm verlegt wird.

Eine vorteilhafte Lehre der Erfindung sieht vor, dass als Bohrkopf ein Raisebohrkopf, bevorzugt mit Schneidrollen, verwendet wird.

Eine vorteilhafte Lehre der Erfindung sieht vor, dass es sich bei der Rohrleitung um eine Rohrleitung aus zugfest miteinander verbundenen Rohrabschnitten handelt, wobei als Rohrabschnitte Bohrrohre oder Produktrohre verwendet werden, die entweder einzeln, zu Rohrschüssen aus mehreren Rohrabschnitten oder als vollständig vorbereitete Pipeline verlegt werden.

Eine vorteilhafte Lehre der Erfindung sieht vor, dass es sich bei dem Bohr- und Verlegekopf um eine Bohr- und Verlegevorrichtung der zuvor beschriebenen Art handelt.

Nachfolgend wird die Erfindung in Verbindung mit einer Zeichnung näher beschrieben, dabei zeigen:
Fig. 1 eine Schnittansicht einer ersten Ausführungsform der erfindungsgemäßen Vorrichtung, und
Fig.2 eine Schnittansicht einer zweiten Ausführungsform der erfindungsgemäßen Vorrichtung.

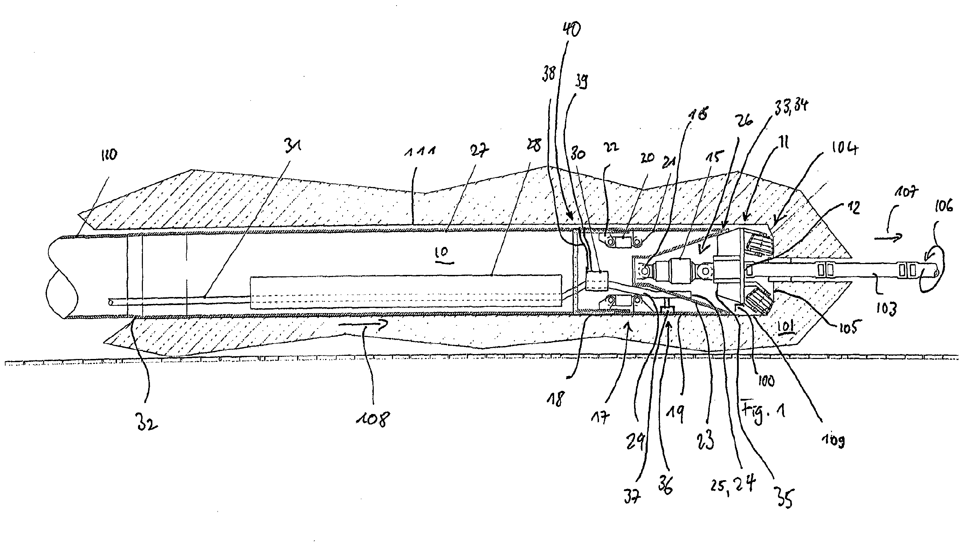

Fig. 1 zeigt eine erfindungsgemäße Bohr- und Verlegevorrichtung 10 in einem Bohrloch 100. Das Bohrloch 100 ist in einem Festgestein 101 angeordnet. Dem Bohrloch 100 vorgeschaltet ist ein Pilotbohrloch 102, das mittels HDD-Verfahren von einem Startpunkt (nicht dargestellt) zu einem Zielpunkt (nicht dargestellt) mittels einer entsprechend geeigneten Bohrvorrichtung hergestellt wurde. In Fig. 1 ist neben Pilotbohrloch 102 der Pilotbohrstrang 103 dargestellt. Die Bohr- und Verlegeeinrichtung 10 setzt sich zusammen aus einem Bohrkopf 11, der einen Anschluss 12 für den Pilotbohrstrang 103 aufweist. Im Aufweitungsbereich 104 sind am Bohrkopf 11 Schneidrollen 13 angeordnet. Diese befinden sich mit der Ortsbrust 105 während des Bohr- und Verlegevorganges im Eingriff. An der Rückseite des Bohrkopfs 11 ist ein Anschluss 14 vorgesehen, an dem ein Drehelement 15 mit dem Bohrkopf 11 verbunden ist. Das Drehelement 15 dient zur Entkopplung des Bohrkopfes gegenüber der Rohrleitung 110, die an der Rückseite der Bohr- und Verlegevorrichtung 10 angeordnet ist.

An seiner gegenüberliegenden Seite ist das Drehelement 15 über einen Anschluss 16 mit einem Aufnahmeelement 17 verbunden. Das Aufnahmeelement 17 besteht aus einem Grundkörper 18 und einem Schildabschnitt 19, der beweglich gegenüber dem Grundkörper 18 angeordnet ist. Zur Verbindung zwischen Grundkörper 18 und Schildabschnitt 19 sind Hydraulikzylinder 20 vorgesehen, die über Anschlusselemente 21, 22 mit dem Grundkörper 18 auf der einen Seite und Schildabschnitt 19 auf der anderen Seite verbunden sind. Der Schildabschnitt 19 weist auf seiner Innenseite einen konisch zulaufenden Aufnahmeabschnitt 23 auf. Innerhalb des Aufnahmeabschnittes 23 ist ein Aufnahmeelement 24 angeordnet, das in der Ausführungsform gem. Fig. 1 als Saugstutzen ausgeführt ist. Der vordere Teil 25 des Saugstutzens 24 ragt durch den Aufnahmeabschnitt 23 des Schildabschnitts 19 in den Aufnahmeraum 26 hinein. Hinter dem Aufnahmeelement 17 und mit diesem fest verbunden ist ein Funktionsabschnitt 27 angeordnet, in dessen Inneren sich eine Pumpe 28 befindet. Der Saugstutzen 24 ist mit der Pumpe 28 über eine Leitung 29 verbunden. In der Leitung 29 zwischen Pumpe 28 und Saugstutzen 24 ist ein Verteilelement 30 angeordnet. Dieser verbindet u.A. den Saugstutzen mit der Pumpe 28.

Weiterhin ist ein weiterer Saugstutzen 37 vorgesehen, der Bestandteil einer Absaugung 36 ist. Über die Absaugung 36 werden die feinen Anteile des Bohrkleins, die sich auch der Bohrlochsohle 109 absetzen abgesaugt. Hierdurch wird ein Aufhäufen der feinen Anteile des Bohrkleins auf der Bohrlochsohle 109 vermieden, was wie sich herausgestellt hat, bei einem Ablagern auf der Bohrlochsohle 109 zu einem Verklemmen des Rohrstrangs führen kann. Diese Feinteilabsaugung wird an den Verteiler 30 oder aber direkt an die Leitung 29 des Saugstutzens 24 angeschlossen.

Weiterhin ist eine Schmiermitteleinrichtung 40 vorgesehen. Dafür ist beispielsweise der Verteilter 30 mit einer Leitung (nicht dargestellt) verbunden, die Schmiermittel in das Bohrloch bringt. Dann ist beispielsweise, wie in Fig. 1 dargestellt, eine Leitung 38 abgehend vom Verteiler 30 vorgesehen, die mit Auslässen 39 für die Abgabe des Schmiermittels verbunden ist. Diese Auslässe 39 sind umlaufend vorgesehen.

Auf der Rückseite der Pumpe 28, dementsprechend der Abförderseite der Pumpe, ist eine Förderleitung 31 angeordnet. Über die Förderleitung 31 wird das durch den Bohrkopf 11 gelöste Bohrklein (nicht dargestellt) zusammen mit der Bohrspülung (nicht dargestellt) abgefördert. Über Tage wird dann das Bohrklein von der Bohrspülung getrennt und die Bohrspülung dem Bohrloch wieder zugeführt. An der Rückseite des Funktionsabschnitts 27 ist ein Anschluss 32 zum Verbinden der Rohrleitung 110 mit der Bohr- und Verlegevorrichtung 10 vorgesehen.

Durch Drehen des Pilotbohrstrangs 103 beispielsweise in Drehrichtung 106 wird der Bohrkopf 11 gedreht. Gleichzeitig wird über den Pilotbohrstrang 102 in Zugrichtung 107 eine Zugkraft auf die Bohr- und Verlegevorrichtung 10 ausgeübt, so dass der Bohrkopf 11 mit seinen Schneidrollen 13 gegen die Ortsbrust 105 gedrückt wird und durch die Drehung in Drehrichtung 106 über die Ortsbrust 105 abläuft und dabei das anstehende Festgestein 101 löst. Das gelöste Bohrklein wird über an den Schneidrollen abgegebene Bohrspülung hinter den Bohrkopf 11 gespült. Zusätzlich wird über die Pumpe 28 und den Saugstutzen 24 die Bohrspülung angesaugt und so ein Transport des Bohrkleins von der Ortsbrust zum Saugstutzen bewirkt.

Zusätzlich oder alternativ kann über die Rohrleitung 110 eine Schubkraft in Schubrichtung 108 beispielsweise mit einem sogenannten Pipethruster als Vorschubvorrichtung (nicht dargestellt) ausgeübt werden, durch die zum einen die Rohrleitung 110 in das Bohrloch 100 eingebracht wird und es zum anderen auch die Möglichkeit gibt, die Schneidrollen 12 des Bohrkopfs 11 in die Ortsbrust 105 zu drücken. Durch das Vorsehen des Drehelements 15 (swivel) werden der Bohrkopf 11 und die Rohrleitung 110 beziehungsweise die dahinter angeordneten Bestandteile der Bohr- und Verlegevorrichtung 10 rotationsentkoppelt.

Bei dem in Fig. 1 dargestellten Bohrkopf 11 handelt es sich um einen sogenannten Raisebohrkopf. Durch diesen wird das Festgestein 101 in einem Durchgang so aufgeweitet, dass die Rohrleitung 110 direkt in das Bohrloch eingebracht wird. An der dem Bohrkopf 11 zugewandten Seite des Aufnahmeabschnittes 23 sind Spülungsauslässe 33 und/oder Schneidmeißel 34 angeordnet. Auch an der Rückseite des Bohrkopfes 11 sind Spülungsauslässe 35 vorgesehen. Durch die Spülungsauslässe 33, 35 wird das auf der Bohrsohle 109 befindliche Bohrklein beziehungsweise das im Aufnahmeraum 26 befindliche Bohrklein bewegt, so dass ein Ansaugen in den Saugstutzen 24 durch die Pumpe 28 erfolgen kann.

Die Schneidmeißel 34 dienen zum einen zur besseren Aufnahme von gröberem Bohrklein und zum anderen zum Lösen von noch an der Bohrsohle 109 befindliches bzw. aus der Bohrlochwand 111 herausragendes und noch nicht vollständig gelöstem Gestein beziehungswiese Lockergestein.

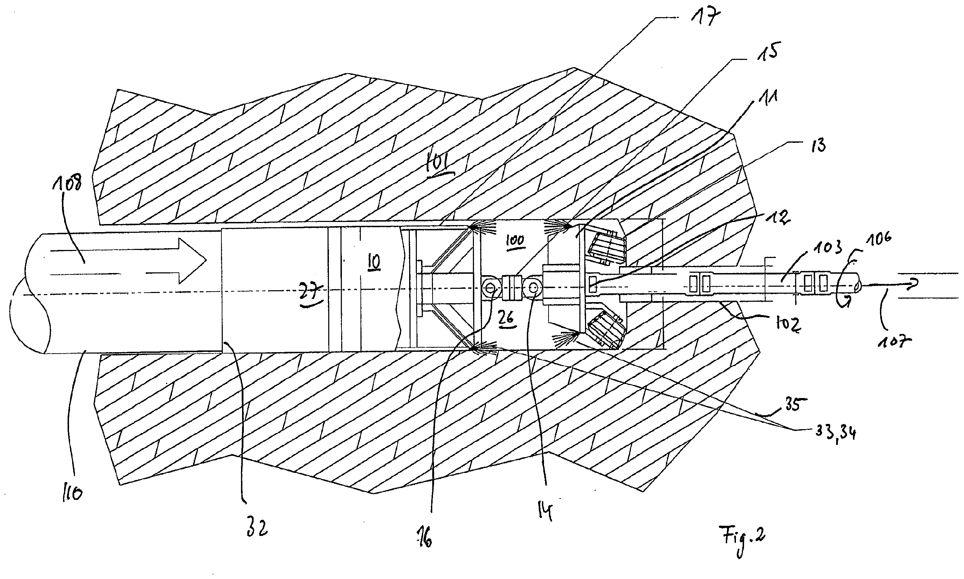

Fig. 2 zeigt eine alternative Ausführungsform der Bohr- und Verlegevorrichtung 10. Auch hierbei ist ein Bohrloch 100 in einem Festgestein 101 mit einem Pilotbohrloch 102 vorgesehen, an dem sich ein Pilotbohrstrang 103 befindet. Der Pilotbohrstrang 103 ist über einen Anschluss 12 mit einem Bohrkopf 11 mit Schneidrollen 13 befestigt. An der Rückseite des Bohrkopfes 11 befindet sich ein Anschluss 14 für ein Drehelement 15. Dieses ist über einen Anschluss 16 mit einem Aufnahmeelement 17 verbunden. An dem Aufnahmeelement 17 sind Spülungsauslässe 33 und Schneidwerkzeug 34 angeordnet. An der Rückseite des Bohrkopfes 11 sind Spülungsauslässe 35 vorgesehen. Hinter dem Aufnahmeelement 17 ist ein Funktionsabschnitt 27 in nicht geschnittener Darstellung dargestellt. Im Inneren des Funktionsabschnitts 27 ist die Pumpe 28 vorgesehen. Auf der Rückseite des Funktionsabschnitts 27 ist ein Anschluss 32 vorgesehen, an dem die Rohrleitung 110 befestigt ist. Das Aufnahmeelement 17 ist ohne Schildabschnitt 19 vorgesehen. Ein solcher Einsatz kann dann vorgesehen werden, wenn Festgestein 101 anliegt, bei dem nicht mit Einbrüchen zu rechnen ist, so dass der Aufnahmeraum 26 ohne eine Schildverkleidung bleiben kann. Das Einbringen der Rohrleitung 110 mit der Bohr- und Verlegevorrichtung 10 gemäß Fig. 2 erfolgt analog der Vorrichtung 10 gemäß Fig. 1.

**Bezugszeichenliste**

| | | | |
|---|---|---|---|
| 10 | Bohr- und Verlegevorrichtung | 32 | Anschluss |
| 11 | Bohrkopf | 33 | Spülungsauslass |
| 12 | Anschluss | 34 | Schneidwerkzeug |
| 13 | Schneidrolle | 35 | Spülungsauslass |
| 14 | Anschluss | 36 | Absaugung |
| 15 | Drehelement | 37 | Saugstutzen |
| 16 | Anschluss | 38 | Leitung |
| 17 | Aufnahmeelement | 39 | Schmiermittelauslass |
| 18 | Grundkörper | 40 | Schmiereinrichtung |
| 19 | Schildabschnitt | 100 | Bohrloch |
| 20 | Hydraulikzylinder | 101 | Festgestein |
| 21 | Anschlusselement | 102 | Pilotbohrloch |
| 22 | Anschlusselement | 103 | Pilotbohrstrang |
| 23 | Aufnahmeabschnitt | 104 | Aufweitungsbereich |
| 24 | Aufnahmeelement/ Saugstutzen | 105 | Ortsbrust |
| | | 106 | Drehrichtung |
| 25 | vorderer Teil | 107 | Zugrichtung |
| 26 | Aufnahmeraum | 108 | Schubrichtung |
| 27 | Funktionsabschnitt | 109 | Bohrsohle |
| 28 | Pumpe | 110 | Rohrleitung |
| 29 | Leitung | 111 | Bohrlochwand |
| 30 | Verteilelement | | |
| 31 | Förderleitung | | |

## Patentansprüche

1. Bohr- und Verlegevorrichtung zum grabenlosen Verlegen einer Rohrleitung (110) mit einem Bohrkopf (11) zum Lösen des Gesteins (101), wobei der Bohrkopf (11) einen Anschluss (12) für ein Pilotbohrgestänge (103) und einen Anschluss (14) für ein nachfolgendes Element der Bohr- und Verlegevorrichtung aufweist, mit einem Drehelement (15) und einem Verbindungsabschnitt (32) als Anschluss für die Rohrleitung, wobei hinter dem Bohrkopf (11) ein Förderabschnitt vorgesehen ist, in dem wenigstens ein Aufnahmeelement (17) zum Aufnehmen des gelösten Gesteins vorgesehen ist, wobei ein Funktionsabschnitt vorgesehen ist, in dem eine Pumpe (28) zum Ansaugen und Abfördern des vom Bohrkopf (11) gelösten Bohrkleins angeordnet ist und an dem der Verbindungsabschnitt angeordnet ist, **dadurch gekennzeichnet, dass** das Drehelement (15) zwischen Bohrkopf (11) und Funktionsabschnitt (27) angeordnet ist, so dass der Funktionsabschnitt (27) und der Bohrkopf (11) rotationsentkoppelt sind, dass der Bohrkopf (11) über das Pilotbohrgestänge (103) angetrieben ist, und dass der Bohrkopf über wenigstens einen Anschluss (14, 16) gegenüber dem Förderabschnitt verschwenkbar ist.

2. Bohr- und Verlegevorrichtung nach Anspruch 1, **dadurch gekennzeichnet, dass** es sich bei dem Bohrkopf (11) um einen Raisebohrkopf, bevorzugt mit Schneidrollen, handelt.

3. Bohr- und Verlegevorrichtung nach Anspruch 1 oder 2, **dadurch gekennzeichnet, dass** im Förderabschnitt ein mit dem Funktionsabschnitt (27) verbundener Schildabschnitt (19) vorgesehen ist.

4. Bohr- und Verlegevorrichtung nach Anspruch 3, **dadurch gekennzeichnet, dass** der Schildabschnitt (19) gegenüber dem Funktionsabschnitt beweglich oder bewegbar ausgeführt ist.

5. Bohr- und Verlegevorrichtung nach Anspruch 4, **dadurch gekennzeichnet, dass** der Schildabschnitt (19) gegenüber dem Funktionsabschnitt über Hydraulikzylinder (20) bewegbar ausgeführt ist.

6. Bohr- und Verlegevorrichtung nach Anspruch 5, **dadurch gekennzeichnet, dass** der Hydraulikzylinder (20) als Meßelement vorgesehen ist.

7. Bohr- und Verlegevorrichtung nach einem der Ansprüche 1 bis 6, **dadurch gekennzeichnet, dass** das Aufnahmeelement ein Ansaugelement (24) ist, oder dass das das Aufnahmeelement ein Ansaugelement (24) ist, an dem ein Trennelement nach der Korngröße des Bohrkleins vorgesehen ist.

8. Bohr- und Verlegevorrichtung nach Anspruch 7, **dadurch gekennzeichnet, dass** das Ansaugelement (24) ein Saugstutzen oder ein Ansaugtrichter ist.

9. Bohr- und Verlegevorrichtung nach einem der Ansprüche 1 bis 8, **dadurch gekennzeichnet, dass** das Bohren und Verlegen in Festgestein mit einer durchschnittlichen Festigkeit größer 150 MPa oder größer 200 MPa vornehmbar ist.

10. Bohr- und Verlegevorrichtung nach einem der Ansprüche 1 bis 9, **dadurch gekennzeichnet, dass** im Förderabschnitt ein Rotationskörper mit Einlassabschnitten vorgesehen ist,

11. Bohr- und Verlegevorrichtung nach Anspruch 10, **dadurch gekennzeichnet, dass** die Einlassabschnitte schaufelartig mit integrierten Einlassöffnungen ausgeführt sind.

12. Bohr- und Verlegevorrichtung nach einem der Ansprüche 1 bis 11, **dadurch gekennzeichnet, dass** es sich bei der Pumpe (28) um eine Strahlpumpe oder um eine Kreiselpumpe handelt.

13. Bohr- und Verlegevorrichtung nach einem der Ansprüche 1 bis 12, **dadurch gekennzeichnet, dass** das Drehelement (15) so ausgeführt ist, dass durch das Drehelement Bohrspülung pumpbar ist.

14. Bohr- und Verlegevorrichtung nach einem der Ansprüche 1 bis 13, **dadurch gekennzeichnet, dass** eine Schmiervorrichtung (40) vorgesehen ist, die hinter bzw. an dem Aufnahmeabschnitt und/oder dem Funktionsabschnitt (27) angeordnet ist, wobei dafür Auslässe (39) zu Abgabe von Schmiermittel, insbesondere Bohrsuspension, vorgesehen sind.

15. Bohr- und Verlegeverfahren zum grabenlosen Verlegen einer Rohrleitung (110) bei dem entlang einer vorgegebenen Bohrlinie eine Pilotbohrung (102) von einem Startpunkt zu einem Zielpunkt erstellt wird, wobei die Pilotbohrung (102) durch das Vorschieben eines Pilotbohrkopfes mit einem Pilotbohrgestänge erfolgt, bei dem nach Erreichen des Zielpunktes an einem Ende des Pilotbohrgestänges ein Bohr- und Verlegekopf (10) angeschlossen wird, der mit der Rohrleitung (110) verbunden wird, und über den das Bohrloch aufgeweitet und gleichzeitig durch Herausziehen des Pilotbohrgestänges (103) aus dem Bohrloch (102) an einer Seite und/oder durch Einschieben der Rohrleitung (110) in das Bohrloch die Rohrleitung (110) verlegt wird, **dadurch gekennzeichnet, dass** der Bohrkopf (11) über das Pilotbohrgestänge (103) gedreht wird, dass das durch den Bohrkopf (11) gelöstes Bohrklein hinter dem Bohrkopf (11) der Bohr- und Verlegevorrichtung (10) hydraulisch aufgenommen und aus dem Bohrloch mittels einer im Bohrloch angeordneten Pumpe (28) und über eine in der Rohrleitung (110) vorgesehenen Förderleitung (31) zusammen mit der Bohrspülung abgefördert wird, dass das Verlegen in einem standfesten Gestein mit einer durchschnittlichen Festigkeit größer 150 MPa, bevorzugt größer 200 MPa, erfolgt.

16. Bohr- und Verlegeverfahren nach Anspruch 15, **dadurch gekennzeichnet, dass** als Bohrkopf (11) ein Raisebohrkopf, bevorzugt mit Schneidrollen, verwendet wird.

17. Bohr- und Verlegeverfahren nach Anspruch 15 oder 16, **dadurch gekennzeichnet, dass** es sich bei der Rohrleitung (110) um eine Rohrleitung aus zugfest miteinander verbundenen Rohrabschnitten handelt, wobei als Rohrabschnitte Bohrrohre oder Produktrohre verwendet werden, die entweder einzeln, zu Rohrschüssen aus mehreren Rohrabschnitten oder als vollständig vorbereitete Pipeline verlegt werden.

18. Bohr- und Verlegeverfahren nach einem der Ansprüche 15 bis 17, **dadurch gekennzeichnet, dass** es sich bei dem Bohr- und Verlegekopf (10) um eine Bohr- und Verlegevorrichtung nach einem der Ansprüche 1 bis 14 handelt.

## Claims

1. Boring and laying device for the trenchless laying of a pipeline (110), with a boring head (11) for loosening the rock (101), wherein the boring head (11) has a connection (12) for a pilot bore linkage (103) and a connection (14) for a following element of the boring and laying device, with a rotary element (15) and with a connecting portion (32) as a connection for the pipeline, wherein a conveying portion is provided behind the boring head (11), in which conveying portion at least one receiving element (17) for receiving the loosened rock is provided, wherein a functional portion is provided in which a pump (28) for suctioning and conveying away the drillings loosened by the boring head (11) is arranged and on which the connecting portion is arranged, **characterized in that** the rotary element (15) is arranged between the boring head (11) and functional portion (27) such that the functional portion (27) and the boring head (11) are rotationally decoupled, **in that** the boring head (11) is driven via the pilot bore linkage (103), and **in that** the boring head is pivotable with respect to the conveying portion via at least one connection (14, 16).

2. Boring and laying device according to Claim 1, **characterized in that** the boring head (11) is a raise-boring head, preferably with cutting rollers.

3. Boring and laying device according to Claim 1 or 2, **characterized in that** a shield portion (19) connected to the functional portion (27) is provided in the conveying portion.

4. Boring and laying device according to Claim 3, **characterized in that** the shield portion (19) is configured such that it is movable or can be moved with respect to the functional portion.

5. Boring and laying device according to Claim 4, **characterized in that** the shield portion (19) is configured such that it can be moved with respect to the functional portion via hydraulic cylinders (20).

6. Boring and laying device according to Claim 5, **characterized in that** the hydraulic cylinder (20) is provided as a measuring element.

7. Boring and laying device according to one of Claims 1 to 6, **characterized in that** the receiving element is a suction element (24), or **in that** the receiving element is a suction element (24) on which a separating element which separates the drillings according to their particle size is provided.

8. Boring and laying device according to Claim 7, **characterized in that** the suction element (24) is a suction nozzle or a suction funnel.

9. Boring and laying device according to one of Claims 1 to 8, **characterized in that** the boring and laying operation can be carried out in solid rock with an average strength of greater than 150 MPa or of greater than 200 MPa.

10. Boring and laying device according to one of Claims 1 to 9, **characterized in that** a rotation body with inlet portions is provided in the conveying portion.

11. Boring and laying device according to Claim 10, **characterized in that** the inlet portions are configured in the manner of vanes with integrated inlet openings.

12. Boring and laying device according to one of Claims 1 to 11, **characterized in that** the pump (28) is a jet pump or a centrifugal pump.

13. Boring and laying device according to one of Claims 1 to 12, **characterized in that** the rotary element (15) is configured such that drilling mud can be pumped through the rotary element.

14. Boring and laying device according to one of Claims 1 to 13, **characterized in that** a lubricating device (40) is provided which is arranged behind or on the receiving portion and/or the functional portion (27), wherein outlets (39) for discharging lubricant, in particular drilling suspension, are provided for this purpose.

15. Boring and laying method for the trenchless laying of a pipeline (110), in which a pilot bore (102) is produced from a starting point to a destination point along a predetermined boring line, wherein the pilot bore (102) is obtained by advancing a pilot boring head with a pilot bore linkage, and in which, after reaching the destination point, a boring and laying head (10) is connected to one end of the pilot bore linkage, which head is connected to the pipeline (110) and via which the borehole is expanded, and simultaneously the pipeline (110) is laid by pulling the pilot bore linkage (103) out of the borehole (102) on one side and/or by pushing the pipeline (110) into the borehole, **characterized in that** the boring head (11) is rotated via the pilot bore linkage (103), **in that** the drillings loosened by the boring head (11) are hydraulically received behind the boring head (11) of the boring and laying device (10) and conveyed away, together with the drilling mud, out of the borehole by means of a pump (28) arranged in the borehole and via a conveying line (31) provided in the pipeline (110), and **in that** the laying operation is carried out in a stable rock with an average strength of greater than 150 MPa, preferably of greater than 200 MPa.

16. Boring and laying method according to Claim 15, **characterized in that** a raise-boring head, preferably with cutting rollers, is used as the boring head (11).

17. Boring and laying method according to Claim 15 or 16, **characterized in that** the pipeline (110) is a pipeline made up of pipe sections connected to one another with a high tensile strength, wherein the pipe sections used are drill pipes or product pipes which are either laid individually to form pipe runs made up of a plurality of pipe sections or are laid as a completely prepared pipeline.

18. Boring and laying method according to one of Claims 15 to 17, **characterized in that** the boring and laying head (10) is a boring and laying device according to one of claims 1 to 14.

## Revendications

1. Dispositif de forage et de pose pour la pose sans tranchée d'une conduite (110) avec une tête de forage (11) pour détacher la roche (101), dans lequel la tête de forage (11) présente un raccord (12) pour une barre de forage pilote (103) et un raccord (14) pour un élément suivant du dispositif de forage et de pose, avec un élément rotatif (15) et une partie de liaison (32) comme raccord pour la conduite, dans lequel il est prévu derrière la tête de forage (11) une partie de transport, dans laquelle il est prévu au moins un élément de réception (17) destiné à recevoir la roche détachée, dans lequel il est prévu une partie fonctionnelle, dans laquelle une pompe (28) destinée à aspirer et évacuer les fines de forage détachées par la tête de forage (11) et sur laquelle la partie de liaison est disposée, **caractérisé en ce que** l'élément rotatif (15) est disposé entre la tête de forage (11) et la partie fonctionnelle (27), de telle manière que la partie fonctionnelle (27) et la tête de forage (11) soient découplées en rotation, **en ce que** la tête de forage (11) est entraînée par la barre de forage pilote (103) et **en ce que** la tête de forage peut pivoter par rapport à la partie de transport par l'intermédiaire d'au moins un raccord (14, 16).

2. Dispositif de forage et de pose selon la revendication 1, **caractérisé en ce que** la tête de forage (11) est une tête de forage ascendant, de préférence avec des molettes de coupe.

3. Dispositif de forage et de pose selon la revendication 1 ou 2, **caractérisé en ce qu'**il est prévu dans la partie de transport une partie de bouclier (19) reliée à la partie fonctionnelle (27).

4. Dispositif de forage et de pose selon la revendication 3, **caractérisé en ce que** la partie de bouclier (19) est mobile ou déplaçable par rapport à la partie fonctionnelle.

5. Dispositif de forage et de pose selon la revendication 4, **caractérisé en ce que** la partie de bouclier (19) est déplaçable par rapport à la partie fonctionnelle par l'intermédiaire de cylindres hydrauliques (20).

6. Dispositif de forage et de pose selon la revendication 5, **caractérisé en ce que** le cylindre hydraulique (20) est prévu comme élément de mesure.

7. Dispositif de forage et de pose selon l'une quelconque des revendications 1 à 6, **caractérisé en ce que** l'élément de réception est un élément d'aspiration (24), ou **en ce que** l'élément de réception est un élément d'aspiration (24), sur lequel il est prévu un élément de séparation selon la taille de grain des fines de forage.

8. Dispositif de forage et de pose selon la revendication 7, **caractérisé en ce que** l'élément d'aspiration (24) est un tuyau d'aspiration ou un entonnoir d'aspiration.

9. Dispositif de forage et de pose selon l'une quelconque des revendications 1 à 8, **caractérisé en ce que** le forage et la pose peuvent être effectués dans une roche dure présentant une résistance moyenne supérieure à 150 MPa ou supérieure à 200 MPa.

10. Dispositif de forage et de pose selon l'une quelconque des revendications 1 à 9, **caractérisé en ce qu'**il est prévu dans la partie de transport un corps rotatif avec des parties d'entrée.

11. Dispositif de forage et de pose selon la revendication 10, **caractérisé en ce que** les parties d'entrée sont réalisées sous forme de pales avec des ouvertures d'entrée intégrées.

12. Dispositif de forage et de pose selon l'une quelconque des revendications 1 à 11, **caractérisé en ce que** la pompe (28) est une pompe à jet ou une pompe centrifuge.

13. Dispositif de forage et de pose selon l'une quelconque des revendications 1 à 12, **caractérisé en ce que** l'élément rotatif (15) est réalisé de telle manière que la boue de forage puisse être pompée par l'élément rotatif.

14. Dispositif de forage et de pose selon l'une quelconque des revendications 1 à 13, **caractérisé en ce qu'**il est prévu un dispositif de lubrification (40), qui est disposé derrière ou sur la partie de réception et/ou sur la partie fonctionnelle (27), dans lequel il est prévu à cet effet des sorties (39) pour la délivrance de lubrifiant, en particulier de suspension de forage.

15. Procédé de forage et de pose pour la pose sans tranche d'une conduite (110), dans lequel on crée le long d'une ligne de forge prédéterminée un forage pilote (102) depuis un point de départ jusqu'à un point de destination, dans lequel on exécute le forage pilote (102) par l'avancement d'une tête de forage pilote avec une barre de forage pilote, dans lequel, après avoir atteint le point de destination, on raccorde à une extrémité de la barre de forage pilote une tête de forage et de pose (10), qui est assemblée à la conduite (110) et par laquelle on élargit le trou de forage et en même temps on pose la conduite (110) en retirant la barre de forage pilote (103) hors du trou de forage (102) sur un côté et/ou en introduisant la conduite dans le trou de forage, **caractérisé en ce que** l'on fait tourner la tête de forage (11) au moyen de la barre de forage pilote (103), **en ce que** l'on capte de façon hydraulique les fines de forage détachées par la tête de forage (11) derrière la tête de forage (11) du dispositif de forage et de pose (10) et on les évacue hors du trou de forage en même temps que la boue de forage au moyen d'une pompe (28) disposée dans le trou de forage et par une conduite de transport (31) prévue dans la conduite (110), et **en ce que** l'on effectue la pose dans une roche stable présentant une résistance moyenne supérieure à 150 MPa, de préférence supérieure à 200 MPa.

16. Procédé de forage et de pose selon la revendication 15, **caractérisé en ce que** l'on utilise comme tête de forage (11) une tête de forage ascendant, de préférence avec des molettes de coupe.

17. Procédé de forage et de pose selon la revendication 15 ou 16, **caractérisé en ce que** la conduite (110) est une conduite composée de tronçons de conduite assemblés l'un à l'autre de façon résistante à la traction, dans lequel on utilise comme tronçons de conduite des tubes de forage ou des tubes de produit, que l'on pose soit de façon isolée, soit sous forme d'éléments de conduite composés de plusieurs tronçons de conduite soit sous forme de pipeline entièrement préparé.

18. Procédé de forage et de pose selon l'une quelconque des revendications 15 à 17, **caractérisé en ce que** la tête de forage et de pose (10) est un dispositif de forage et de pose selon l'une quelconque des revendications 1 à 14.
